# FASCICULE DE BREVET EUROPEEN

(11) **EP 3 494 158 B1**
(45) Date de publication et mention de la délivrance du brevet: **10.06.2020**
(21) Numéro de dépôt: 17754765.0
(22) Date de dépôt: 03.08.2017
(51) Int. Cl.: C08G 63/18, C08G 63/672

(54) **POLYESTER THERMOPLASTIQUE SEMI-CRISTALLIN POUR LA FABRICATION DE FILMS BI-ORIENTÉS**
HALBKRISTALLINER THERMOPLASTISCHER POLYESTER ZUR HERSTELLUNG VON BIAXIAL GESTRECKTEN FOLIEN
SEMI-CRYSTALLINE THERMOPLASTIC POLYESTER FOR PRODUCING BIORIENTED FILMS

(30) Priorité: 03.08.2016 FR 1657545
(43) Date de publication de la demande: 12.06.2019
(73) Titulaire: Roquette Frères, 62136 Lestrem (FR)
(72) Inventeur: AMEDRO, Hélène, 62400 Bethune (FR); SAINT-LOUP, René, 59160 Lomme (FR)
(74) Mandataire: Plasseraud IP
(86) Numéro de dépôt international: PCT/FR2017/052177
(87) Numéro de publication internationale: WO 2018/024993

(56) Documents cités:
- WO-A1-2013/136875
- FR-A1- 3 027 906
- US-A- 5 958 581

## Description

### Domaine de l'invention

La présente invention se rapporte à l'utilisation d'un polyester thermoplastique semi-cristallin comprenant au moins un motif 1,4 : 3,6-dianhydrohexitol qui présente d'excellentes propriétés pour la fabrication de films bi-orientés.

### Arrière-plan technologique de l'invention

Les matières plastiques sont devenues incontournables pour la fabrication en série d'objets. En effet, leur caractère thermoplastique permet à ces matières d'être transformées à cadence élevée en toutes sortes d'objets.

Certains polyesters aromatiques thermoplastiques ont des propriétés thermiques leur permettant d'être utilisés directement pour la fabrication de matériaux. Ils comprennent des motifs diol aliphatique et diacide aromatique. Parmi ces polyesters aromatiques, on peut citer le polyéthylène téréphtalate (PET), qui est un polyester comprenant des motifs éthylène glycol et acide téréphtalique, servant par exemple à la fabrication de films bi-orientés.

Toutefois, pour certaines applications ou dans certaines conditions d'utilisation, il est nécessaire d'améliorer certaines propriétés et notamment la résistance au choc ou encore de tenue thermique. C'est ainsi que des PET modifiés glycol (PETg) ont été développés. Ce sont généralement des polyesters comprenant, en plus des motifs éthylène glycol et acide téréphtalique, des motifs cyclohexanediméthanol (CHDM). L'introduction de ce diol dans le PET lui permet d'adapter les propriétés à l'application visée, par exemple d'améliorer sa résistance au choc ou ses propriétés optiques.

D'autres PET modifiés ont également été développés en introduisant dans le polyester des motifs 1,4 : 3,6-dianhydrohexitol, notamment de l'isosorbide (PEIT). Ces polyesters modifiés présentent des températures de transition vitreuse plus élevées que les PET non modifiés ou les PETg comprenant du CHDM. En outre, les 1,4 : 3,6-dianhydrohexitols présentent l'avantage de pouvoir être obtenus à partir de ressources renouvelables telles que l'amidon. Un problème de ces PEIT est qu'ils peuvent présenter des propriétés insuffisantes de résistance au choc. De plus, la température de transition vitreuse peut être insuffisante pour la fabrication de certains objets plastiques.

Pour améliorer les propriétés de résistance au choc des polyesters, il est connu de l'art antérieur d'utiliser des polyesters dont on a réduit la cristallinité. En ce qui concerne les polyesters à base d'isosorbide, on peut citer la demande US2012/0177854 qui décrit des polyesters comprenant des motifs acide téréphtalique et des motifs diols comprenant de 1 à 60% en moles d'isosorbide et de 5 à 99% de 1,4-cyclohexanediméthanol qui présentent des propriétés de résistance à l'impact améliorées. Comme indiqué dans la partie introductive de cette demande, il s'agit d'obtenir des polymères dont on élimine la cristallinité par l'ajout de comonomères, et donc ici par l'ajout de 1,4-cyclohexanediméthanol. Dans la partie exemples est décrite la fabrication de différents poly(ethylène-co-1,4-cyclohexanediméthylène-co-isosorbide) téréphtalates (PECIT) ainsi qu'également un exemple de poly(1,4-cyclohexanediméthylène-co-isosorbide) téréphtalate (PCIT).

On peut également noter que, tandis que les polymères de type PECIT ont fait l'objet de développements commerciaux, ce n'est pas le cas des PCIT. En effet leur fabrication était jusqu'ici considérée comme complexe, l'isosorbide présentant une faible réactivité comme diol secondaire. Yoon et al. (Synthesis and Characteristics of a Biobased High-Tg Terpolyester of Isosorbide, Ethylene Glycol, and 1,4-Cyclohexane Dimethanol: Effect of Ethylene Glycol as a Chain Linker on Polymerization, Macromolecules, 2013, 46, 7219-7231*)* ont ainsi montré que la synthèse de PCIT est bien plus difficile à réaliser que celle de PECIT. Ce document décrit l'étude de l'influence du taux d'éthylène glycol sur la cinétique de fabrication de PECIT.

Dans *Yoon et al.,* un PCIT amorphe (qui comprend par rapport à la somme des diols environ 29% d'isosorbide et 71% de CHDM), est fabriqué afin de comparer sa synthèse et ses propriétés avec celles des polymères de type PECIT. L'utilisation de températures élevées lors de la synthèse induit une dégradation thermique du polymère formé si on se réfère au premier paragraphe de la partie *Synthesis* de la page 7222, cette dégradation étant notamment liée à la présence des diols aliphatiques cycliques tels que l'isosorbide. De ce fait, *Yoon et al.* ont utilisé un procédé dans lequel la température de polycondensation est limitée à 270°C. Yoon et al. ont constaté que, même en augmentant le temps de polymérisation, le procédé ne permet pas non plus d'obtenir un polyester présentant une viscosité suffisante. Ainsi, sans ajout d'éthylène glycol, la viscosité du polyester reste limitée, ceci malgré l'utilisation de temps de synthèse prolongés.

Ainsi, malgré les modifications apportées aux PET, il existe toujours un besoin constant de nouveaux polyesters présentant des propriétés améliorées.

Dans le domaine des matières plastiques, et notamment pour la fabrication de films bi-orientés, il est nécessaire de disposer de polyester thermoplastique semi-cristallin aux propriétés améliorées qui permettent d'obtenir des films bi-orientés présentant une meilleure tenue thermique ainsi que des propriétés mécaniques telles que la contrainte au seuil et la tenue à la déchirure améliorées.

On connait du document US6126992 des objets fabriqués à partir de polymères ayant des motifs acide téréphtalique, des motifs éthylène glycol et des motifs isosorbide et éventuellement un autre diol (par exemple le 1,4-cyclohexanediméthanol). L'ensemble des polymères obtenus présentent ainsi des motifs éthylène glycol car il est largement admis que ces derniers sont nécessaires à l'incorporation de l'isosorbide et à l'obtention d'une température de transition vitreuse élevée. De plus, les exemples de préparation mis en œuvre ne permettent pas d'obtenir des polymères une composition en motif permettant de donner entière satisfaction dans la fabrication de films bi-orientés. En effet, l'exemple 1 décrit notamment la préparation d'un polymère comprenant 33,5% de motif éthylène glycol et 12,9% de motif isosorbide soit un ratio motif isosorbide/ motif éthylène glycol de 0,39 ce qui n'est pas convaincant pour la fabrication de films bi-orientés.

Le document US5958581 décrit des films bi-orientés en polyester fabriqués à partir d'un polymère ayant des motifs isosorbide, des motifs acide téréphtalique, et des motifs éthylène glycol. Les films bi-orientés ainsi fabriqués sont adaptés pour une utilisation notamment en tant qu'emballage alimentaire ou en tant qu'isolant. Le document WO 2013/136875 A1 décrit la préparation de films polyester bi-orientés. L'exemple 2 décrit la préparation d'un film polyester bi-orienté à partir d'isosorbide, de cyclohexane-diméthanol, d'éthylène glycol et de dimethyl téréphtalate. La part en mole d'éthylène glycol est inférieure à 5%. La viscosité réduite en solution est de 66 mL/g.

Ainsi, il existe encore à ce jour le besoin de disposer de polyesters thermoplastiques semi-cristallin contenant des motifs 1,4 : 3,6-dianhydrohexitol pour la fabrication de films bi-orientés, lesdits polyesters permettant d'obtenir des films bi-orientés ayant des propriétés mécaniques améliorées.

Il est donc du mérite de la Demanderesse d'avoir trouvé que cet objectif pouvait, contre toute attente, être atteint avec un polyester thermoplastique semi-cristallin à base d'isosorbide ne présentant pas d'éthylène glycol alors qu'il était connu jusqu'à présent que ce dernier était indispensable pour l'incorporation dudit l'isosorbide. En effet, le polyester thermoplastique semi-cristallin utilisé selon la présente invention, grâce à une viscosité et un ratio en motif particuliers, présente des propriétés améliorées pour une utilisation selon l'invention dans la fabrication de films bi-orientés.

### Résumé de l'invention

L'invention a ainsi pour objet l'utilisation d'un polyester thermoplastique semi-cristallin pour la fabrication de films bi-orientés, ledit polyester comprenant :
- au moins un motif 1,4 : 3,6-dianhydrohexitol (A) ;
- au moins un motif diol alicyclique (B) autre que les motifs 1,4 : 3,6-dianhydrohexitol (A) ;
- au moins un motif acide téréphtalique (C) ;
dans lequel le ratio (A)/[(A)+(B)] étant d'au moins 0,05 et d'au plus 0,30 ;
ledit polyester étant exempt de motifs diol aliphatique non cyclique ou comprenant une quantité molaire de motifs diol aliphatique non cyclique, par rapport à la totalité des motifs monomériques du polyester, inférieure à 5%, et dont la viscosité réduite en solution (25°C ; phénol (50%m) : ortho-dichlorobenzène (50%m) ; 5 g/L de polyester) est supérieure à 50 mL/g.

Un second objet de l'invention concerne un procédé de fabrication de films bi-orientés à base du polyester thermoplastique semi-cristallin décrit ci-dessus.

Enfin, un troisième objet de l'invention concerne un film bi-orienté comprenant le polyester thermoplastique semi-cristallin précédemment décrit.

Ces polyesters thermoplastiques semi-cristallins offrent d'excellentes propriétés et permettent notamment de fabriquer des films bi-orientés présentant une meilleure tenue thermique et des propriétés mécaniques améliorées.

### Description détaillée de l'invention

Un premier objet de l'invention concerne l'utilisation d'un polyester thermoplastique semi-cristallin pour la fabrication de films bi-orientés, ledit polyester comprenant :
- au moins un motif 1,4 : 3,6-dianhydrohexitol (A) ;
- au moins un motif diol alicyclique (B) autre que les motifs 1,4 : 3,6-dianhydrohexitol (A) ;
- au moins un motif acide téréphtalique (C) ;
dans lequel le ratio molaire (A)/[(A)+(B)] étant d'au moins 0,05 et d'au plus 0,30 et la viscosité réduite en solution supérieure à 50 mL/g.

Par « ratio molaire (A)/[(A)+(B)] » on entend le ratio molaire motifs 1,4 : 3,6-dianhydrohexitol (A) / somme des motifs 1,4 : 3,6-dianhydrohexitol (A) et des motifs diols alicycliques (B) autre que les motifs 1,4 : 3,6-dianhydrohexitol (A).

Le polyester thermoplastique semi-cristallin est exempt de motifs diol aliphatiques non cycliques ou en comprend une faible quantité.

Par « faible quantité molaire de motifs diol aliphatique non cyclique», on entend notamment une quantité molaire de motifs diol aliphatique non cyclique inférieure à 5%. Selon l'invention, cette quantité molaire représente le rapport de la somme des motifs diol aliphatique non cyclique, ces motifs pouvant être identiques ou différents, par rapport à la totalité des motifs monomériques du polyester.

Un diol aliphatique non cyclique peut être un diol aliphatique non cyclique linéaire ou ramifié. Il peut également être un diol aliphatique non cyclique saturé ou insaturé. Outre l'éthylène glycol, le diol aliphatique non cyclique linéaire saturé peut par exemple être le 1,3-propanediol, le 1,4-butanediol, le 1,5-pentanediol, le 1,6-hexanediol, le 1,8-octanediol et/ou le 1,10-decanediol. Comme exemple de diol aliphatique non cyclique ramifié saturé, on peut citer le 2-methyl-1,3-propanediol, le 2,2,4-trimethyl-1,3-pentanediol, le 2-ethyl-2-butyl-1,3-propanediol, le propylèneglycol et/ou le néopentylglycol. Comme exemple de diol aliphatique insaturé, on peut citer par exemple le cis-2-butene-1,4-diol.

Cette quantité molaire de motif diol aliphatique non cyclique est avantageusement inférieure à 1%. De préférence, le polyester est exempt de motif diol aliphatique non cyclique et plus préférentiellement, il est exempt d'éthylène glycol.

Malgré la faible quantité de diol aliphatique non cyclique, et donc d'éthylène glycol, utilisé pour la synthèse, il est obtenu de manière surprenante un polyester thermoplastique semi-cristallin présentant une viscosité réduite en solution élevée et dans lequel l'isosorbide est particulièrement bien incorporé. Sans être lié par une quelconque théorie, ceci s'expliquerait par le fait que la cinétique de réaction de l'éthylène glycol est beaucoup plus élevée que celle du 1,4 : 3,6-dianhydrohexitol ce qui limite fortement l'intégration de ce dernier dans le polyester. Les polyesters en résultant présentent donc un faible taux d'intégration de 1,4 : 3,6-dianhydrohexitol et par conséquent une température de transition vitreuse relativement basse.

Le monomère (A) est un 1,4 : 3,6-dianhydrohexitol peut être l'isosorbide, l'isomannide, l'isoidide, ou un de leurs mélanges. De préférence, le 1,4 : 3,6-dianhydrohexitol (A) est l'isosorbide.

L'isosorbide, l'isomannide et l'isoidide peuvent être obtenus respectivement par déshydratation de sorbitol, de mannitol et d'iditol. En ce qui concerne l'isosorbide, il est commercialisé par la Demanderesse sous le nom de marque POLYSORB® P.

Le diol alicyclique (B) est également appelé diol aliphatique et cyclique. Il s'agit d'un diol qui peut notamment être choisi parmi le 1,4-cyclohexanedimethanol, le 1,2-cyclohexanedimethanol, le 1,3-cyclohexanedimethanol ou un mélange de ces diols. Très préférentiellement le diol alicyclique (B) est le 1,4-cyclohexanedimethanol. Le diol alicyclique (B) peut être dans la configuration *cis*, dans la configuration *trans* ou peut être un mélange de diols en configuration *cis* et *trans.*

Le ratio molaire motifs 1,4 : 3,6-dianhydrohexitol (A) / somme des motifs 1,4 : 3,6-dianhydrohexitol (A) et des motifs diols alicycliques (B) autre que les motifs 1,4 : 3,6-dianhydrohexitol (A), soit (A)/[(A)+(B)], est d'au moins 0,05 et d'au plus 0,30. Avantageusement, ce ratio est d'au moins 0,1 et d'au plus 0,28, et tout particulièrement ce ratio est d'au moins 0,15 et d'au plus 0,25.

Un polyester thermoplastique semi-cristallin particulièrement adapté pour la fabrication de films bi-orientés comprend :
- une quantité molaire de motifs 1,4 : 3,6-dianhydrohexitol (A) allant de 2,5 à 14 % mol ;
- une quantité molaire de motifs diol alicyclique (B) autre que les motifs 1,4 : 3,6-dianhydrohexitol (A) allant de 31 à 42,5 % mol ;
- une quantité molaire de motifs acide téréphtalique (C) allant de 45 à 55 % mol.

Les quantités en différents motifs dans le polyester peuvent être déterminées par RMN 1H ou par analyse chromatographique du mélange de monomères issus d'une méthanolyse ou d'une hydrolyse complète du polyester, de préférence par RMN ¹H.

L'homme de l'art peut aisément trouver les conditions d'analyse pour déterminer les quantités en chacun des motifs du polyester. Par exemple, à partir d'un spectre RMN d'un poly(1,4-cyclohexanedimethylène-co-isosorbide téréphtalate), les déplacements chimiques relatifs au 1,4-cyclohexanedimethanol sont compris entre 0,9 et 2,4 ppm et 4,0 et 4,5 ppm, les déplacements chimiques relatifs au cycle téréphtalate sont compris entre 7,8 et 8,4 ppm et les déplacements chimiques relatifs à l'isosorbide sont compris entre 4,1 et 5,8 ppm. L'intégration de chaque signal permet de déterminer la quantité de chaque motif du polyester.

Les polyesters thermoplastiques semi-cristallins utilisés selon l'invention présentent une température de fusion allant de 210 à 295°C, par exemple de 240 à 285 °C.

De plus, les polyesters thermoplastiques semi-cristallins présentent une température de transition vitreuse allant de 85 à 120°C, par exemple de 90 à 115°C. Les températures de transition vitreuse et de fusion sont mesurées par les méthodes classiques, notamment en utilisant la calorimétrie différentielle à balayage (DSC) en utilisant une vitesse de chauffe de 10°C/min. Le protocole expérimental est détaillé dans la partie exemples ci-après.

Avantageusement, le polyester thermoplastique semi-cristallin présente une chaleur de fusion supérieure à 10 J/g, de préférence supérieure à 20 J/g, la mesure de cette chaleur de fusion consistant à faire subir à un échantillon de ce polyester un traitement thermique à 170°C pendant 16 heures puis à évaluer la chaleur de fusion par DSC en chauffant l'échantillon à 10°C/min.

Le polyester thermoplastique semi-cristallin utilisé selon l'invention présente notamment une clarté L* supérieure à 40. Avantageusement, la clarté L* est supérieure à 55, de préférence supérieure à 60, tout préférentiellement supérieure à 65, par exemple supérieure à 70. Le paramètre L* peut être déterminé à l'aide d'un spectrophotomètre, en utilisant le modèle CIE Lab.

Enfin, la viscosité réduite en solution dudit polyester thermoplastique semi-cristallin est supérieure à 50 mL/g et de préférence inférieure à 150 mL/g, cette viscosité pouvant être mesurée à l'aide d'un viscosimètre capillaire Ubbelohde à 25°C dans un mélange équimassique de phénol et d'ortho-dichlorobenzène après dissolution du polymère à 130°C sous agitation, la concentration de polymère introduit étant de 5g/L.

Ce test de mesure de viscosité réduite en solution est, de par le choix des solvants et de la concentration des polymères utilisés, parfaitement adapté pour déterminer la viscosité du polymère visqueux préparé selon le procédé décrit ci-après.

Le caractère semi-cristallin des polyesters thermoplastiques utilisés selon la présente invention se caractérise lorsque que ces derniers, après un traitement thermique de 16h à 170°C, présentent des raies de diffraction aux rayons X ou un pic de fusion endothermique en Analyse Calorimétrique Différentielle à Balayage (DSC).

Le polyester thermoplastique semi-cristallin tel que précédemment défini présente bien des avantages pour la fabrication de films bi-orientés.

En effet, grâce notamment au ratio molaire motifs 1,4 : 3,6-dianhydrohexitol (A) / somme des motifs 1,4 : 3,6-dianhydrohexitol (A) et des motifs diols alicycliques (B) autre que les motifs 1,4 : 3,6-dianhydrohexitol (A) d'au moins 0,05 et d'au plus 0,30 et à une viscosité réduite en solution supérieure à 50 mL/g et de préférence inférieure à 150 mL/g, les polyesters thermoplastiques semi-cristallins permettent de fabriquer des films bi-orientés présentant une meilleure tenue thermique et des propriétés mécaniques améliorées comparativement par exemple à des films bi-orientés fabriqués à partir de polyéthylène isosorbide téréphtalate (PEIT) classiques.

La différence entre un film bi-orienté et une feuille réside dans l'épaisseur en tant que telle. Cependant aucun standard industriel ne définit précisément l'épaisseur en-delà de laquelle une feuille est considérée comme un film bi-orienté. Ainsi, selon la présente invention, un film bi-orienté est défini comme ayant une épaisseur inférieure à 250 µm. De préférence, les films bi-orientés ont une épaisseur de 5 µm à 250 µm, particulièrement de 10 µm à 50 µm et encore plus particulièrement de 10 µm à 25 µm comme par exemple environ 15 µm.

Les films bi-orientés selon l'invention peuvent être directement fabriqués à partir de l'état fondu après polymérisation du polyester thermoplastique semi-cristallin.

Selon une alternative, le polyester thermoplastique semi-cristallin peut être conditionné sous une forme facilement manipulable telle que des pellets ou des granulés avant d'être utilisé pour la fabrication de films bi-orientés. D'une manière préférentielle, le polyester thermoplastique semi-cristallin est conditionné sous forme de granulés, lesdits granulés étant avantageusement séchés avant la transformation sous forme de films bi-orientés. Le séchage est réalisé de manière à obtenir des granulés présentant un taux d'humidité résiduelle inférieur à 300 ppm, préférentiellement inférieur à 200 ppm comme par exemple environ 180 ppm. Les films bi-orientés fabriqués peuvent être des films bi-orientés monocouches ou des films bi-orientés multicouches obtenus par exemple par laminage de plusieurs couches dont au moins une d'entre elles contient un polyester thermoplastique semi-cristallin selon l'invention.

Les films bi-orientés fabriqués à partir du polyester thermoplastique semi-cristallin selon l'invention peuvent être obtenus par les méthodes connues de l'homme du métier comme par exemple l'extrusion par filière plate ou encore par filière annulaire (extrusion gonflage). D'une manière préférentielle, les films bi-orientés sont fabriqués par la méthode de l'extrusion par filière plate.

La fabrication de film bi-orienté via l'extrusion par filière plate, dit extrusion cast, consiste à étirer suivant deux axes une feuille plate en sortie d'extrudeuse. D'une manière particulièrement avantageuse, cette extrusion est réalisée par l'intermédiaire d'un procédé Stenter qui permet d'obtenir des films bi-orientés par biorientation séquentielle. Le procédé Stenter se déroule en trois étapes.

La première étape consiste à fabriquer un film primaire obtenu après extrusion à travers une filière plate, étiré en l'air sur une courte distance puis refroidi sur un rouleau thermostaté, immergé ou non dans l'eau. Le film ainsi obtenu présente une épaisseur moyenne d'environ 500 µm. La deuxième étape consiste à réaliser un premier étirage dans le sens machine (longitudinal) par le passage du film sur une série de rouleaux de préchauffage avant d'être étiré entre deux rouleaux tournant à des vitesses différentes. Le film obtenu après cette deuxième présente alors une épaisseur d'environ 100µm. Enfin, la troisième étape consiste à réaliser un second étirage en sens transverse. Ainsi, le film mono-étiré obtenu à l'étape précédente est saisi par des pinces circulant sur des rails qui s'éloignent l'un de l'autre, l'ensemble étant positionné dans un four à air chaud. Le film bi-orienté obtenu peut ainsi présenter une épaisseur d'environ 20 µm.

La fabrication des films bi-orientés peut également être réalisée par extrusion-gonflage et consiste donc à extruder la matière en filière annulaire et à l'étirer simultanément dans les deux directions par l'action combinée du tirage et du soufflage. Les gaines tubulaires ainsi obtenues ont une épaisseur entre 10 et 300 µm et un périmètre qui va de quelques centimètres à plus de 10 mètres. L'axe d'extrusion peut-être vertical ou horizontal, avec des hauteurs de ballons pouvant atteindre plus de 20 mètres.

Selon cette méthode, un gaine mince est extrudée, pincée et gonflée avec de l'air qui remplit la gaine par l'axe de la tête filière. On procède ainsi à un premier étirage radial par gonflage. La gaine est ensuite refroidie, puis étirée longitudinalement par des rouleaux tireurs.

Selon un mode de réalisation particulier, le polyester thermoplastique semi-cristallin précédemment défini est utilisé en combinaison avec un ou plusieurs polymères additionnels pour la fabrication de films bi-orientés.

Le polymère additionnel peut être choisi parmi les polyamides, les polyesters autres que le polyester selon l'invention, le polystyrène, les copolymères de styrène, les copolymères styrène-acrylonitrile, les copolymères styrène-acrylonitrile-butadiène, les polyméthacrylates de méthyle, les copolymères acryliques, les poly(éther-imides), les polyoxyde de phénylène tels que le polyoxyde de (2,6-diméthylphenylène), les polysulfate de phénylène, les poly (ester-carbonates), les polycarbonates, les polysulfones, les polysulfone ethers, les polyéther cétone et les mélanges de ces polymères.

Le polymère additionnel peut également être un polymère permettant d'améliorer les propriétés au choc du polymère, notamment les polyoléfines fonctionnelles telles que les polymères et copolymères d'éthylène ou de propylène fonctionnalisés, des copolymères cœur-écorce ou des copolymères à bloc.

Un ou plusieurs additifs peuvent également être ajoutés lors de la fabrication du film bi-orienté à partir du polyester thermoplastique semi-cristallin afin de lui conférer des propriétés particulières.

Ainsi, à titre d'exemple d'additif, on peut citer les charges ou les fibres de nature organique ou inorganique, nanométriques ou non, fonctionnalisées ou non. Il peut s'agir de silices, de zéolithes, de fibres ou de billes de verre, d'argiles, de mica, de titanates, de silicates, de graphite, de carbonate de calcium, de nanotubes de carbone, de fibres de bois, de fibres de carbone, de fibres de polymère, de protéines, de fibres cellulosiques, de fibres ligno-cellulosiques et d'amidon granulaire non déstructuré. Ces charges ou fibres peuvent permettre d'améliorer la dureté, la rigidité ou la perméabilité à l'eau ou aux gaz.

L'additif peut également être choisi parmi des agents opacifiants, des colorants et des pigments. Ils peuvent être choisis parmi l'acétate de cobalt et les composés suivants : HS-325 Sandoplast® RED BB (qui est un composé porteur d'une fonction azo également connu sous le nom Solvent Red 195), HS-510 Sandoplast® Blue 2B qui est une anthraquinone, Polysynthren® Blue R, et Clariant® RSB Violet.

L'additif peut être également un agent de résistance aux UV comme par exemple des molécules type benzophénone ou benzotriazole, comme la gamme Tinuvin™ de BASF : tinuvin 326, tinuvin P ou le tinuvin 234 par exemple ou des amines encombrées comme la gamme Chimassorb™ de BASF : Chimassorb 2020, Chimasorb 81 ou Chimassorb 944 par exemple.

L'additif peut également être un agent ignifuge ou retardateur de flamme, comme par exemple des dérivés halogénés ou des retardateurs de flamme non halogénés (par exemple des dérivés phosphorés, tels que les Exolit® OP) ou comme la gamme des cyanurates mélaminés (par exemple les melapur™ : mélapur 200) ou encore des hydroxydes d'aluminium ou de magnésium.

Enfin, l'additif peut également être un agent antistatique ou encore un agent anti-block tel que des dérivés de molécules hydrophobes par exemple les Incroslip™ ou Incromol™ de Croda.

Le film bi-orienté comprenant le polyester thermoplastique semi-cristallin peut également subir des traitements additionnels permettant d'améliorer ses propriétés. A titre d'exemple de traitements additionnels on citera notamment le traitement corona, le traitement par métallisation ou encore le traitement plasma.

Le traitement corona permet, via l'ionisation de l'air grâce à un arc électrique à haute fréquence et haute tension, de créer des microporosités sur la surface du film bi-orienté permettant notamment aux encres et aux colles de mieux adhérer. Ainsi traités, les films bi-orientés trouvent une application toute particulière pour l'emballage.

Le traitement par métallisation permet, via une évaporation d'aluminium sous vide, de condenser une couche d'aluminium de quelques nanomètres à quelques dizaines de nanomètres à la surface du film bi-orienté qui est alors refroidi pour éviter sa fusion. Ce traitement permet d'opacifier le film bi-orienté et de limiter ainsi la pénétration de la lumière ce qui est particulièrement avantageux pour éviter de dénaturer les propriétés d'un éventuel contenu.

Enfin, traitement plasma consiste à utiliser la technologie du dépôt de plasma atmosphérique afin de traiter l'extrême surface (quelques nm) du film bi-orienté et de permettre la réalisation d'un greffage sélectif de fonctions chimiques. Ce greffage sélectif peut ainsi procurer un effet anti-adhésif ou promoteur d'adhésion au film bi-orienté.

L'utilisation selon la présente invention de polyester thermoplastique semi-cristallin pour la fabrication de films bi-orientés est particulièrement avantageuse.

En effet, les films bi-orientés ainsi fabriqués à partir de polyester thermoplastique semi-cristallin dont le ratio molaire motifs 1,4 : 3,6-dianhydrohexitol (A) / somme des motifs 1,4 : 3,6-dianhydrohexitol (A) et des motifs diols alicycliques (B) autre que les motifs 1,4 : 3,6-dianhydrohexitol (A) étant d'au moins 0,05 et d'au plus 0,30 et dont la viscosité réduite en solution est supérieure à 50 mL/g, présentent des propriétés remarquables, à la fois du point de vue des propriétés mécaniques, de la qualité optique et également en terme de perméabilité aux gaz.

En effet, les films bi-orientés obtenus présentent une amélioration de la tenue thermique se traduisant notamment par une augmentation de la cadence de tirage de l'assemblages pour les films bi-orientés complexés ainsi que par une plage d'utilisation en température plus importante que les films bi-orientés usuels obtenus avec du PET.

Les films bi-orientés obtenus selon l'invention présentent également une amélioration des propriétés mécaniques telles que le module de traction, la contrainte au seuil et tenue à la déchirure. Ces améliorations permettent d'offrir des solutions plus résistantes en particulier pour le marché de l'emballage et une meilleure protection des produits via une amélioration de l'emballage secondaire.

Les films bi-orientés fabriqués selon l'invention trouveront ainsi une utilisation toute particulière pour des applications alimentaires grâce à leur propriétés de barrière vis-à-vis des arômes et grâce à leur possibilité d'une utilisation à chaud et à froid, notamment pour la congélation.

Un second objet de l'invention concerne un procédé de fabrication d'un film bi-orienté, ledit procédé comprenant les étapes suivantes de:
- Fourniture d'un polyester thermoplastique semi-cristallin tel que défini ci-dessus.
- Préparation dudit film bi-orienté à partir du polyester thermoplastique semi-cristallin obtenu à l'étape précédente.

L'étape de préparation peut être réalisée par les méthodes connues de l'homme du métier qui classiquement mises en œuvre pour la fabrication de films bi-orientés.

Ainsi à titre d'exemple, l'étape de préparation peut être réalisée par la méthode de l'extrusion par filière plate ou encore par filière annulaire (extrusion gonflage). D'une manière préférentielle, l'étape de préparation est réalisée par la méthode de l'extrusion par filière plate, dite extrusion cast, et notamment par un procédé Stenter.

Un troisième objet de l'invention concerne un film bi-orienté comprenant le polyester thermoplastique semi-cristallin décrit ci-dessus. Le film bi-orienté selon l'invention peut également comprendre un polymère additionnel et/ou un ou plusieurs additifs tels que définis ci-dessus.

Le polyester thermoplastique semi-cristallin particulièrement adapté pour la fabrication de films bi-orientés peut être préparé par un procédé de synthèse comprenant :
- une étape d'introduction dans un réacteur de monomères comprenant au moins un 1,4 : 3,6-dianhydrohexitol (A), au moins un diol alicyclique (B) autre que les 1,4 : 3,6-dianhydrohexitols (A) et au moins un acide téréphtalique (C), le ratio molaire ((A)+(B))/(C) allant de 1,05 à 1,5, lesdits monomères étant exempts de diol aliphatique non cyclique ou comprenant, par rapport à la totalité des monomères introduits, une quantité molaire de motifs diol aliphatique non cyclique inférieure à 5% ;
- une étape d'introduction dans le réacteur d'un système catalytique ;
- une étape de polymérisation desdits monomères pour former le polyester, ladite étape consistant en :
   ▪ un premier stade d'oligomérisation pendant lequel le milieu réactionnel est agité sous atmosphère inerte à une température allant de 265 à 280°C, avantageusement de 270 à 280°C, par exemple 275°C ;
   ▪ un second stade de condensation des oligomères pendant lequel les oligomères formés sont agités sous vide à une température allant de 278 à 300°C afin de former le polyester, avantageusement de 280 à 290°C, par exemple 285°C ;
- une étape de récupération du polyester thermoplastique semi-cristallin.

Ce premier stade du procédé se fait en atmosphère inerte, c'est-à-dire sous atmosphère d'au moins un gaz inerte. Ce gaz inerte peut notamment être du diazote. Ce premier stade peut se faire sous flux de gaz et il peut également se faire sous pression, par exemple à une pression comprise entre 1,05 et 8 bars.

De préférence, la pression va de 3 à 8 bars, tout préférentiellement de 5 à 7,5 bars, par exemple 6,6 bars. Dans ces conditions de pression préférées, on favorise la réaction de l'ensemble des monomères entre eux en limitant la perte de monomères lors de ce stade.

Préalablement au premier stade d'oligomérisation, une étape de désoxygénation des monomères est préférentiellement réalisée. Elle peut se faire par exemple une fois les monomères introduits dans le réacteur, en réalisant un vide puis en y introduisant un gaz inerte tel que l'azote. Ce cycle vide-introduction de gaz inerte peut être répété à plusieurs reprises, par exemple de 3 à 5 fois. De préférence, ce cycle vide-azote est réalisé à une température entre 60 et 80°C afin que les réactifs, et notamment les diols, soient totalement fondus. Cette étape de désoxygénation présente l'avantage d'améliorer les propriétés de coloration du polyester obtenu à la fin du procédé.

Le second stade de condensation des oligomères se fait sous vide. La pression peut diminuer au cours de ce second stade de manière continue en utilisant des rampes de baisse de pression, par paliers ou encore en utilisant une combinaison de rampes de baisse de pression et de paliers. De préférence, à la fin de ce second stade, la pression est inférieure à 10 mbar, tout préférentiellement inférieure à 1 mbar.

Le premier stade de l'étape de polymérisation a de préférence une durée allant de 20 minutes à 5 heures. Avantageusement, le second stade a une durée allant de 30 minutes à 6 heures, le début de ce stade consistant au moment où le réacteur est placé sous vide, c'est-à-dire à une pression inférieure à 1 bar.

Le procédé comprend en outre une étape d'introduction dans le réacteur d'un système catalytique. Cette étape peut se dérouler préalablement ou pendant l'étape de polymérisation décrite précédemment.

On entend par système catalytique, un catalyseur ou un mélange de catalyseurs, éventuellement dispersé(s) ou fixé(s) sur un support inerte.

Le catalyseur est utilisé dans des quantités adaptées pour obtenir un polymère de haute viscosité conformément à l'utilisation selon l'invention pour la fabrication de films bi-orientés.

On utilise avantageusement lors du stade d'oligomérisation un catalyseur d'estérification. Ce catalyseur d'estérification peut être choisi parmi les dérivés d'étain, de titane, de zirconium, d'hafnium, de zinc, de manganèse, de calcium, de strontium, des catalyseurs organiques comme l'acide para-toluène sulfonique (APTS), l'acide méthane sulfonique (AMS) ou un mélange de ces catalyseurs. A titre d'exemple de tels composés, on peut citer ceux donnés dans la demande US2011282020A1 aux paragraphes [0026] à [0029], et à la page 5 de la demande WO 2013/062408 A1.

De préférence, on utilise lors du premier stade de transestérification, un dérivé de zinc, ou un dérivé de manganèse d'étain ou de germanium.

A titre d'exemple de quantités massiques, on peut utiliser de 10 à 500 ppm de métal contenu dans le système catalytique lors du stade d'oligomérisation, par rapport à la quantité de monomères introduits.

En fin de transestérification, le catalyseur de la première étape peut être optionnellement bloqué par l'ajout d'acide phosphoreux ou d'acide phosphorique, ou alors comme dans le cas de l'étain (IV) réduit par des phosphites tels que le phosphite de triphenyle ou les phosphite des tris(nonylephenyle) ou ceux cités au paragraphe [0034] de la demande US2011282020A1.

Le second stade de condensation des oligomères peut optionnellement être réalisé avec l'ajout d'un catalyseur. Ce catalyseur est avantageusement choisi parmi les dérivés d'étain, préférentiellement d'étain, de titane, de zirconium, de germanium, d'antimoine, de bismuth, d'hafnium, de magnésium, de cérium, de zinc, de cobalt, de fer, de manganèse, de calcium, de strontium, de sodium, de potassium, d'aluminium, de lithium ou d'un mélange de ces catalyseurs. Des exemples de tels composés peuvent être par exemple ceux donnés dans le brevet EP 1882712 B1 aux paragraphes [0090] à [0094].

De préférence, le catalyseur est un dérivé d'étain, de titane, de germanium, d'aluminium ou d'antimoine.

A titre d'exemple de quantités massiques, on peut utiliser de 10 à 500 ppm de métal contenu dans le système catalytique lors du stade de condensation des oligomères, par rapport à la quantité de monomères introduits.

Tout préférentiellement, on utilise un système catalytique lors du premier stade et du second stade de polymérisation. Ledit système est avantageusement constitué d'un catalyseur à base d'étain ou d'un mélange de catalyseurs à base d'étain, de titane, de germanium et d'aluminium.

A titre d'exemple, on peut utiliser une quantité massique de 10 à 500 ppm de métal contenu dans le système catalytique, par rapport à la quantité de monomères introduits.

Selon le procédé de préparation, on utilise avantageusement un anti-oxydant lors de l'étape de polymérisation des monomères. Ces anti-oxydants permettent de réduire la coloration du polyester obtenu. Les anti-oxydants peuvent être des anti-oxydants primaires et/ou secondaires. L'anti-oxydant primaire peut être un phénol encombré stériquement tels que les composés Hostanox® 0 3, Hostanox® 0 10, Hostanox® 0 16, Ultranox® 210, Ultranox®276, Dovernox® 10, Dovernox® 76, Dovernox® 3114, Irganox® 1010, Irganox® 1076 ou un phosphonate tel que l'Irgamod® 195. L'anti-oxydant secondaire peut être des composés phosphorés trivalents tels que Ultranox® 626, Doverphos® S-9228, Hostanox® P-EPQ, ou l'Irgafos 168.

Il est également possible d'introduire, comme additif de polymérisation dans le réacteur, au moins un composé susceptible de limiter les réactions parasites d'éthérification tel que l'acétate de sodium, le tétraméthylammonium hydroxyde ou le tétraéthylammonium hydroxyde.

Enfin, le procédé comprend une étape de récupération du polyester à l'issue de l'étape de polymérisation. Le polyester thermoplastique semi-cristallin ainsi récupéré peut ensuite être mis en forme tel que décrit précédemment.

Selon une variante du procédé de synthèse, une étape d'augmentation de masse molaire est réalisée après l'étape de récupération du polyester thermoplastique semi-cristallin.

L'étape d'augmentation de masse molaire est réalisée par post-polymérisation et peut consister en une étape de polycondensation à l'état solide (PCS) du polyester thermoplastique semi-cristallin ou en une étape d'extrusion réactive du polyester thermoplastique semi-cristallin en présence d'au moins un allongeur de chaîne.

Ainsi, selon une première variante du procédé de fabrication, l'étape de post-polymérisation est réalisée par PCS.

La PCS est généralement réalisée à une température comprise entre la température de transition vitreuse et la température de fusion du polymère. Ainsi, pour réaliser la PCS, il est nécessaire que le polymère soit semi-cristallin. De préférence, ce dernier présente une chaleur de fusion supérieure à 10 J/g, de préférence supérieure à 20 J/g, la mesure de cette chaleur de fusion consistant à faire subir à un échantillon de ce polymère de viscosité réduite en solution plus faible un traitement thermique à 170°C pendant 16 heures puis à évaluer la chaleur de fusion par DSC en chauffant l'échantillon à 10 K/min.

Avantageusement, l'étape de PCS est réalisée à une température allant de 190 à 280°C, de préférence allant de 200 à 250°C, cette étape devant impérativement être réalisée à une température inférieure à la température de fusion du polyester thermoplastique semi-cristallin.

L'étape de PCS peut se faire en atmosphère en inerte, par exemple sous azote ou sous argon ou sous vide.

Selon une deuxième variante du procédé de fabrication, l'étape de post-polymérisation est réalisée par extrusion réactive du polyester thermoplastique semi-cristallin en présence d'au moins un allongeur de chaîne.

L'allongeur de chaîne est un composé comprenant deux fonctions susceptibles de réagir, en extrusion réactive, avec des fonctions, alcool, acide carboxylique et/ou ester d'acide carboxylique du polyester thermoplastique semi-cristallin. L'allongeur de chaîne peut par exemple être choisi parmi les composés comprenant deux fonctions isocyanate, isocyanurate, lactame, lactone, carbonate, époxy, oxazoline et imide, lesdites fonctions pouvant être identiques ou différentes. L'allongement de chaîne du polyester thermoplastique peut être effectué dans tous les réacteurs aptes à mélanger un milieu très visqueux avec une agitation suffisamment dispersive pour assurer une bonne interface entre la matière fondue et le ciel gazeux du réacteur. Un réacteur particulièrement adapté à cette étape de traitement est l'extrusion.

L'extrusion réactive peut être réalisée dans une extrudeuse de tout type, notamment une extrudeuse mono-vis, une extrudeuse bi-vis co-rotatives ou une extrudeuse bi-vis contrarotatives. Toutefois, on préfère réaliser cette extrusion réactive en utilisant une extrudeuse co-rotative.

L'étape d'extrusion réactive peut se faire en :
- introduisant le polymère dans l'extrudeuse de manière à faire fondre ledit polymère ;
- puis introduisant dans le polymère fondu l'allongeur de chaîne ;
- puis faisant réagir dans l'extrudeuse le polymère avec l'allongeur de chaîne ;
- puis récupérant le polyester thermoplastique semi-cristallin obtenu à l'étape d'extrusion.

Lors de l'extrusion, la température à l'intérieur de l'extrudeuse est réglée de manière à être supérieure à la température de fusion du polymère. La température à l'intérieur de l'extrudeuse peut aller de 150°C à 320°C.

Le polyester thermoplastique semi-cristallin obtenu après l'étape d'augmentation de masse molaire est récupéré puis mis en forme tel que décrit précédemment.

L'invention sera mieux comprise à l'aide des exemples et figures ci-après qui se veulent purement illustratifs et ne limitent en rien la portée de la protection.

### Exemples

Les propriétés des polymères ont été étudiées avec les techniques suivantes :

### Viscosité réduite en solution

La viscosité réduite en solution est évaluée à l'aide d'un viscosimètre capillaire Ubbelohde à 25°C dans un mélange équimassique de phénol et d'ortho-dichlorobenzène après dissolution du polymère à 130°C sous agitation, la concentration de polymère introduit étant de 5g/L.

### DSC

Les propriétés thermiques des polyesters ont été mesurées par calorimétrie différentielle à balayage (DSC) : L'échantillon est tout d'abord chauffé sous atmosphère d'azote dans un creuset ouvert de 10 à 320°C (10°C.min-1), refroidi à 10°C (10°C.min-1) puis réchauffé à 320°C dans les mêmes conditions que la première étape. Les températures de transition vitreuse ont été prises au point médian (en anglais mid-point) du second chauffage. Les températures de fusion éventuelles sont déterminées sur le pic endothermique (début du pic (en anglais, onset)) au premier chauffage.

De même la détermination de l'enthalpie de fusion (aire sous la courbe) est réalisée au premier chauffage.

Pour les exemples illustratifs présentés ci-dessous les réactifs suivants ont été utilisés : 1,4-Cyclohexane dimethanol (pureté 99%, mélange d'isomères cis et trans)
Isosorbide (pureté >99,5%) Polysorb® P de Roquette Frères
Acide téréphtalique (pureté 99+%) de Acros
Irganox® 1010 de BASF AG
Dibutylétain oxyde (pureté 98%) de Sigma Aldrich

### Exemple 1 : Préparation d'un polyester thermoplastique semi-cristallin et utilisation pour la fabrication de film bi-orienté.

### A : Polymérisation

Deux polyesters thermoplastiques **P1** et **P2** ont été préparés.

Le premier polyester thermoplastique semi-cristallin **P1** a été préparé selon le mode opératoire ci-après, pour une utilisation selon l'invention avec notamment un ratio molaire motifs 1,4 : 3,6-dianhydrohexitol (A) / somme des motifs 1,4 : 3,6-dianhydrohexitol (A) et des motifs diols alicycliques (B) autre que les motifs 1,4 : 3,6-dianhydrohexitol (A) d'au moins 0,05 et d'au plus 0,30.

Ainsi, dans un réacteur de 7,5L sont ajoutés 1432 g (9,9 mol) de 1,4-cyclohexanedimethanol, 484 g (3,3 mol) d'isosorbide, 2000 g (12,0 mol) d'acide téréphtalique, 1,65 g d'Irganox 1010 (anti-oxydant) et 1,39 g de dibutylétainoxyde (catalyseur). Pour extraire l'oxygène résiduel des cristaux d'isosorbide, 4 cycles vide-azote sont effectués une fois la température du milieu réactionnel comprise entre 60 et 80°C.

Le mélange réactionnel est ensuite chauffé à 275°C (4°C/min) sous 6,6 bars de pression et sous agitation constante (150 tr/min) jusqu'à obtenir un taux d'estérification de 87% (estimé à partir de la masse de distillat collectée). Puis, la pression est réduite à 0,7 mbar en 90 minutes selon une rampe logarithmique et la température amenée à 285°C.

Ces conditions de vide et de température ont été maintenues jusqu'à obtenir une augmentation de couple de 12,1 Nm par rapport au couple initial.

Enfin, un jonc de polymère est coulé par la vanne de fond du réacteur, refroidi dans un bac d'eau thermo-régulé à 15°C et découpé sous forme de granulés d'environ 15 mg.

La résine ainsi obtenue a une viscosité réduite en solution de 80,1 mL/g.

L'analyse par RMN ¹H du polyester montre que le polyester final contient 17,0 mol% d'isosorbide par rapport aux diols. En ce qui concerne les propriétés thermiques, le polymère présente une température de transition vitreuse de 96°C, une température de fusion de 253°C avec une enthalpie de fusion de 23,2J/g.

Le second polyester thermoplastique **P2** a été préparé selon le même mode opératoire que le polyester thermoplastique semi-cristallin **P1.**

Ce second polyester **P2** est un polyester servant de comparatif et présente ainsi un ratio molaire [A]/([A]+[B]) de 0,44. Les quantités utilisées en composés sont détaillées dans le tableau 1 ci-dessous :

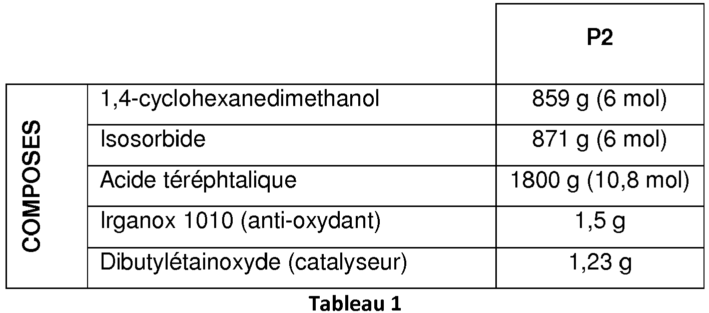

La résine ainsi obtenue avec le polyester **P2** a une viscosité réduite en solution de 54,9 mL/g.

En ce qui concerne les propriétés thermiques, le polyester **P2** présente une température de transition vitreuse de **125**°C, et ne présente pas de pic de fusion endothermique en analyse calorimétrique différentielle à balayage même après un traitement thermique de 16h à 170°C ce qui indique son caractère amorphe.

### B : Mise en forme

Les granulés du polyester **P1** et **P2** obtenus à l'étape A de polymérisation sont séchés sous vide à 140°C pour **P1** et 110°C pour **P2** afin d'atteindre des taux d'humidité résiduelle inférieurs à 300 ppm, dans cet exemple, la teneur en eau des granulés est de 180 ppm.

Les granulés maintenus en atmosphère sèche sont alors introduits dans la trémie de l'extrudeuse.

L'extrudeuse utilisée est une extrudeuse Collin équipée d'une filière plate, l'ensemble est complété par une calandreuse. Les paramètres d'extrusion sont regroupés dans le tableau 2 ci-dessous :

**Tableau 2**

| Paramètres | Unités | Valeurs |
|---|---|---|
| Température (alim -> filière) | °C | 250/265/275/275/280 **(P1)** |
| | | 220/235/245/245/250 **(P2)** |
| Vitesse de rotation de la vis | rpm | 80 |
| Température des rouleaux | °C | 40 |

Les feuilles ainsi extrudées à partir du polyester **P1** et **P2** présentent une épaisseur de 4 mm.

Les feuilles sont alors découpés en carrés de dimension 11,2x11,2 cm puis, à l'aide d'une machine d'étirage Karo IV de marque Brückner, les découpes des feuilles sont étirées en deux directions en procédant à une température de 130°C à 140°C avec un taux d'étirage de 2,8x2,8 et en un temps de 2 secondes dans les deux directions. On obtient ainsi un film bi-orienté obtenu présentant une épaisseur de 14 µm.

Les films bi-orientés ainsi obtenues à partir des polyesters **P1** et **P2** présentent des propriétés bien différentes.

En effet, le polyester **P1** permet d'obtenir un film bi-orienté dont la structure cristalline a été vérifiée par diffraction/diffusion des rayons X caractéristique d'une cristallisation sous contrainte lors d'une phase de bi-étirage. Le film bi-orienté obtenu présente de bonnes propriétés mécaniques.

Au contraire, lorsque le polyester **P2** est extrudé il ne présente pas la possibilité de se structurer de manière à faire apparaître une structure cristalline. Cette absence de structure cristalline le rend cassant et nécessite une épaisseur plus importante pour pouvoir être utilisé, entrainant ainsi un éventail d'applications plus restreint. En effet, ce film ne peut pas subir de traitement de bi-orientation sur la machine Karo IV sans être détruit.

### Exemple 2 : Préparation de films bi-orientés

### A : Préparation

Deux autres polyesters semi cristallin **P3** et **P4** selon l'invention ont été préparés suivant le même mode opératoire que l'exemple 1. Les quantités des différents composés ont été adaptées de manière à obtenir les polyesters **P3** et **P4** présentant respectivement 15 % en moles et 25 % en moles d'isosorbide.

Les quantités ont été déterminées par RMM ¹H et les quantités sont exprimées en pourcentage par rapport à la quantité totale de diols dans le polyester.

La viscosité réduite en solution Les polyesters **P3** et **P4** est respectivement de 75 mUg et 63 mL/g.

### B : Mise en forme de feuilles

Les granulés du polyester **P3** et **P4** obtenus à l'étape A sont ensuite séchés pendant 5h à 150°C est présentent respectivement une teneur en eau de 0,074 % en poids et 0,085 % en poids.

Les granulés maintenus en atmosphère sèche sont alors introduits dans la trémie de l'extrudeuse. L'extrudeuse utilisée est une extrudeuse Collin équipée d'une filière plate, l'ensemble est complété par une calandreuse. Les paramètres d'extrusion sont regroupés dans le tableau 3 ci-dessous :

**Tableau 3**

| Paramètres | Unités | Valeurs |
|---|---|---|
| Température (alim -> filière) | °C | 210/260/275/295/275 **(P3)** |
| | | 210/240/255/275/255 **(P4)** |
| | | 210/255/270/290/260 **(P4)** |
| | | 210/265/280/300/270 **(P4)** |
| Vitesse de rotation de la vis | rpm | 50 |
| Température des rouleaux | °C | 55 |

Les feuilles ainsi extrudées à partir du polyester **P3** et **P4** présentent une épaisseur de 350 µm.

### C : Etirage Biaxial

Les feuilles obtenues précédemment sont découpées en carrés de dimension 12x12 cm puis étirées à l'aide d'une machine d'étirage Karo IV de marque Brückner. Les paramètres d'étirage pour chaque polyester sont repris ci-dessous:

**Tableau 4**

| **Paramètres** | **Feuilles P3** | **Feuilles P4** |
|---|---|---|
| Préchauffage | 2 min | 2 min |
| Température consigne de la machine | 125°C (mesurée 134°C) | 135°C (mesurée 138°C) |
| Taux d'étirage | λ=2^{∗}2 | λ=3^{∗}3 |
| | λ=3^{∗}3 | λ=3,5^{∗}3,5 |
| | λ=3,2^{∗}3,2 | |

Les vitesses d'étirage ont été adaptées de manière à obtenir 100% d'étirage pour les feuilles obtenues avec le polyester **P3** et 50 % d'étirage pour les feuilles obtenues avec le polyester **P4.** Le temps d'étirage est de 2 secondes.

Plusieurs films bi-orientés ont ainsi été fabriqués et présentent des épaisseurs variant de 20 µm à 110 µm en fonction des taux d'étirage. L'ensemble des films bi-orientés sont transparents, d'aspect brillant et l'étirage est homogène.

Comme le montrent les exemples, le polyester thermoplastique semi-cristallin selon l'invention est une excellente alternative pour la fabrication de films bi-orientés présentant de bonnes propriétés mécaniques.

## Revendications

1. Utilisation d'un polyester thermoplastique semi-cristallin pour la fabrication de films bi-orientés, ledit polyester comprenant :
• au moins un motif 1,4 : 3,6-dianhydrohexitol (A) ;
• au moins un motif diol alicyclique (B) autre que les motifs 1,4 : 3,6-dianhydrohexitol (A) ;
• au moins un motif acide téréphtalique (C) ;
dans lequel le ratio molaire (A)/[(A)+(B)] étant d'au moins 0,05 et d'au plus 0,30 ; ledit polyester étant exempt de motifs diol aliphatique non cyclique ou comprenant
une quantité molaire de motifs diol aliphatique non cyclique, par rapport à la totalité des motifs monomériques du polyester, inférieure à 5%, et dont la viscosité réduite en solution (25°C ; phénol (50%m) : ortho-dichlorobenzène (50%m) ; 5 g/L de polyester) est supérieure à 50 mL/g.

2. Utilisation selon la revendication 1, **caractérisée en ce que** le diol alicyclique (B) est un diol choisi parmi le 1,4-cyclohexanedimethanol, le 1,2-cyclohexanedimethanol, le 1,3-cyclohexanedimethanol ou un mélange de ces diols, très préférentiellement le 1,4-cyclohexanedimethanol.

3. Utilisation selon l'une quelconque des revendications 1 ou 2, **caractérisée en ce que** le 1,4 : 3,6-dianhydrohexitol (A) est l'isosorbide.

4. Utilisation selon l'une quelconque des revendications 1 à 3, **caractérisée en ce que** le polyester est exempt de motif diol aliphatique non cyclique ou comprend une quantité molaire de motifs diol aliphatique non cyclique, par rapport à la totalité des motifs monomériques du polyester, inférieure à 1%, de préférence le polyester est exempt de motif diol aliphatique non cyclique.

5. Utilisation selon l'une quelconque des revendications 1 à 4, **caractérisée en ce que** le ratio molaire (motif 3,6-dianhydrohexitol (A) + motif diol alicyclique (B) autre que les motifs 1,4 : 3,6-dianhydrohexitol (A))/(motif acide téréphtalique (C)) est de 1,05 à 1,5.

6. Utilisation selon l'une quelconque des revendications 1 à 5, **caractérisée en ce que** le film bi-orienté présente une épaisseur de 10 µm à 250 µm.

7. Utilisation selon l'une quelconque des revendications 1 à 6, **caractérisée en ce que** le film bi-orienté comprend un ou plusieurs polymères additionnels et/ou un ou plusieurs additifs.

8. Utilisation selon l'une quelconque des revendications 1 à 7, **caractérisée en ce que** le film bi-orienté est traité par un traitement corona, un traitement par métallisation ou un traitement plasma.

9. Film bi-orienté comprenant un polyester thermoplastique semi-cristallin comprenant :
• au moins un motif 1,4 : 3,6-dianhydrohexitol (A) ;
• au moins un motif diol alicyclique (B) autre que les motifs 1,4 : 3,6-dianhydrohexitol (A) ;
• au moins un motif acide téréphtalique (C) ;
dans lequel le ratio molaire (A)/[(A)+(B)] étant d'au moins 0,05 et d'au plus 0,30 ; ledit polyester étant exempt de motifs diol aliphatique non cyclique ou comprenant
une quantité molaire de motifs diol aliphatique non cyclique, par rapport à la totalité des motifs monomériques du polyester, inférieure à 5%, et dont la viscosité réduite en solution (25°C ; phénol (50%m) : ortho-dichlorobenzène (50%m) ; 5 g/L de polyester) est supérieure à 50 mL/g.

10. Film bi-orienté selon la revendication 9, **caractérisé en ce que** le diol alicyclique (B) est un diol choisi parmi le 1,4-cyclohexanedimethanol, le 1,2-cyclohexanedimethanol, le 1,3-cyclohexanedimethanol ou un mélange de ces diols, très préférentiellement le 1,4-cyclohexanedimethanol.

11. Film bi-orienté selon l'une des revendications 9 ou 10, **caractérisé en ce que** le 1,4 : 3,6-dianhydrohexitol (A) est l'isosorbide.

12. Film bi-orienté selon l'une des revendications 9 à 11, **caractérisé en ce que** le polyester est exempt de motif diol aliphatique non cyclique ou comprend une quantité molaire de motifs diol aliphatique non cyclique, par rapport à la totalité des motifs monomériques du polyester, inférieure à 1%, de préférence le polyester est exempt de motif diol aliphatique non cyclique.

13. Film bi-orienté selon l'une des revendications 9 à 12, **caractérisé en ce que** le ratio molaire (motif 3,6-dianhydrohexitol (A) + motif diol alicyclique (B) autre que les motifs 1,4 : 3,6-dianhydrohexitol (A))/(motif acide téréphtalique (C)) est de 1,05 à 1,5.

14. Film bi-orienté selon l'une des revendications 9 à 13, **caractérisé en ce que** le film bi-orienté présente une épaisseur de 10 µm à 250 µm.

15. Film bi-orienté selon l'une des revendications 9 à 14, **caractérisé en ce que** le film bi-orienté comprend un ou plusieurs polymères additionnels et/ou un ou plusieurs additifs.

16. Film bi-orienté selon l'une des revendications 9 à 15, **caractérisé en ce que** le film bi-orienté est traité par un traitement corona, un traitement par métallisation ou un traitement plasma.

17. Procédé de fabrication d'un film bi-orienté comprenant les étapes suivantes de :
• Fourniture d'un polyester thermoplastique semi-cristallin comprenant au moins un motif 1,4 : 3,6-dianhydrohexitol (A), au moins un motif diol alicyclique (B) autre que les motifs 1,4 : 3,6-dianhydrohexitol (A), au moins un motif acide téréphtalique (C), dans lequel le ratio molaire (A)/[(A)+(B)] étant d'au moins 0,05 et d'au plus 0,30, ledit polyester étant exempt de motifs diol aliphatique non cyclique ou comprenant une quantité molaire de motifs diol aliphatique non cyclique, par rapport à la totalité des motifs monomériques du polyester, inférieure à 5%, et dont la viscosité réduite en solution (25°C; phénol (50%m) : ortho-dichlorobenzène (50%m) ; 5 g/L de polyester) est supérieure à 50 mL/g.
• Préparation dudit film bi-orienté à partir du polyester thermoplastique semi-cristallin obtenu à l'étape précédente.

18. Procédé de fabrication selon la revendication 17, **caractérisé en ce que** l'étape de préparation est réalisée par la méthode de l'extrusion cast, et notamment par le procédé Stenter.

19. Procédé de fabrication selon la revendication 17 ou 18, **caractérisé en ce que** le diol alicyclique (B) est un diol choisi parmi le 1,4-cyclohexanedimethanol, le 1,2-cyclohexanedimethanol, le 1,3-cyclohexanedimethanol ou un mélange de ces diols, très préférentiellement le 1,4-cyclohexanedimethanol.

20. Procédé de fabrication selon l'une quelconque des revendications 17 à 19, **caractérisé en ce que** le 1,4 : 3,6-dianhydrohexitol (A) est l'isosorbide.

21. Procédé de fabrication selon l'une quelconque des revendications 17 à 20, **caractérisé en ce que** le polyester est exempt de motif diol aliphatique non cyclique ou comprend une quantité molaire de motifs diol aliphatique non cyclique, par rapport à la totalité des motifs monomériques du polyester, inférieure à 1%, de préférence le polyester est exempt de motif diol aliphatique non cyclique.

22. Procédé de fabrication selon l'une quelconque des revendications 17 à 21, **caractérisé en ce que** le ratio molaire (motif 3,6-dianhydrohexitol (A) + motif diol alicyclique (B) autre que les motifs 1,4 : 3,6-dianhydrohexitol (A))/(motif acide téréphtalique (C)) est de 1,05 à 1,5.

23. Procédé de fabrication selon l'une quelconque des revendications 17 à 22, **caractérisé en ce que** le film bi-orienté présente une épaisseur de 10 µm à 250 µm.

24. Procédé de fabrication selon l'une quelconque des revendications 17 à 23, **caractérisé en ce que** le film bi-orienté comprend un ou plusieurs polymères additionnels et/ou un ou plusieurs additifs.

25. Procédé de fabrication selon l'une quelconque des revendications 17 à 24, **caractérisé en ce que** le film bi-orienté est traité par un traitement corona, un traitement par métallisation ou un traitement plasma.

## Patentansprüche

1. Verwendung eines teilkristallinen thermoplastischen Polyesters zur Herstellung von bi-orientierten Filmen, wobei der Polyester umfasst:
• mindestens eine 1,4 : 3,6-Dianhydrohexitol-Einheit (A);
• mindestens eine alicyclische Dioleinheit (B), die anders ist als die 1,4 : 3,6-Dianhydrohexitol-Einheiten (A);
• mindestens eine Terephthalsäureeinheit (C);
wobei das Molverhältnis (A)/[(A) + (B)] mindestens 0,05 und höchstens 0,30 beträgt;
wobei der Polyester frei von nichtcyclischen aliphatischen Dioleinheiten ist oder eine molare Menge nichtcyclischer aliphatischer Dioleinheiten bezogen auf die Gesamtheit der monomeren Polyestereinheiten von weniger als 5% umfasst und dessen verringerte Viskosität in Lösung (25 °C; Phenol (50%m) : ortho-Dichlorbenzol (50%m); 5 g/l Polyester) größer als 50 ml/g ist.

2. Verwendung nach Anspruch 1, **dadurch gekennzeichnet, dass** das alicyclische Diol (B) ein Diol ist, ausgewählt aus 1,4-Cyclohexandimethanol, 1,2-Cyclohexandimethanol, 1,3-Cyclohexandimethanol oder einer Mischung dieser Diole, sehr bevorzugt 1,4-Cyclohexandimethanol.

3. Verwendung nach einem der Ansprüche 1 oder 2, **dadurch gekennzeichnet, dass** das 1,4 : 3,6-Dianhydrohexitol (A) Isosorbid ist.

4. Verwendung nach einem der Ansprüche 1 bis 3, **dadurch gekennzeichnet, dass** der Polyester frei von einer nichtcyclischen aliphatischen Dioleinheit ist oder eine molare Menge nichtcyclischer aliphatischer Dioleinheiten bezogen auf die Gesamtheit der monomeren Polyestereinheiten von weniger als 1% umfasst, bevorzugt der Polyester frei von einer nichtcyclischen aliphatischen Dioleinheit ist.

5. Verwendung nach einem der Ansprüche 1 bis 4, **dadurch gekennzeichnet, dass** das Molverhältnis (3,6-Dianhydrohexitol-Einheit (A) + alicyclische Dioleinheit (B), die anders ist als die 1,4 : 3,6-Dianhydrohexitol-Einheiten (A)) / (Terephthalsäureeinheit (C)) 1,05 bis 1,5 beträgt.

6. Verwendung nach einem der Ansprüche 1 bis 5, **dadurch gekennzeichnet, dass** der bi-orientierte Film eine Dicke von 10 µm bis 250 µm aufweist.

7. Verwendung nach einem der Ansprüche 1 bis 6, **dadurch gekennzeichnet, dass** der bi-orientierte Film ein oder mehrere zusätzliche Polymere und/oder ein oder mehrere Additive umfasst.

8. Verwendung nach einem der Ansprüche 1 bis 7, **dadurch gekennzeichnet, dass** der bi-orientierte Film durch eine Koronabehandlung, eine Metallisierungsbehandlung oder eine Plasmabehandlung behandelt wird.

9. Bi-orientierter Film, umfassend einen teilkristallinen thermoplastischen Polyester, umfassend:
• mindestens eine 1,4 : 3,6-Dianhydrohexitol-Einheit (A);
• mindestens eine alicyclische Dioleinheit (B), die anders ist als die 1,4 : 3,6-Dianhydrohexitol-Einheiten (A);
• mindestens eine Terephthalsäureeinheit (C);
wobei das Molverhältnis (A)/[(A) + (B)] mindestens 0,05 und höchstens 0,30 beträgt;
wobei der Polyester frei von nichtcyclischen aliphatischen Dioleinheiten ist oder eine molare Menge nichtcyclischer aliphatischer Dioleinheiten bezogen auf die Gesamtheit der monomeren Polyestereinheiten von weniger als 5% umfasst und dessen verringerte Viskosität in Lösung (25 °C; Phenol (50%m) : ortho-Dichlorbenzol (50%m); 5 g/l Polyester) größer als 50 ml/g ist.

10. Bi-orientierter Film nach Anspruch 9, **dadurch gekennzeichnet, dass** das alicyclische Diol (B) ein Diol ist, ausgewählt aus 1,4-Cyclohexandimethanol, 1,2-Cyclohexandimethanol, 1,3-Cyclohexandimethanol oder einer Mischung dieser Diole, sehr bevorzugt 1,4-Cyclohexandimethanol.

11. Bi-orientierter Film nach einem der Ansprüche 9 oder 10, **dadurch gekennzeichnet, dass** das 1,4 : 3,6-Dianhydrohexitol (A) Isosorbid ist.

12. Bi-orientierter Film nach einem der Ansprüche 9 bis 11, **dadurch gekennzeichnet, dass** der Polyester frei von einer nichtcyclischen aliphatischen Dioleinheit ist oder eine molare Menge nichtcyclischer aliphatischer Dioleinheiten bezogen auf die Gesamtheit der monomeren Polyestereinheiten von weniger als 1% umfasst, bevorzugt der Polyester frei von einer nichtcyclischen aliphatischen Dioleinheit ist.

13. Bi-orientierter Film nach einem der Ansprüche 9 bis 12, **dadurch gekennzeichnet, dass** das Molverhältnis (3,6-Dianhydrohexitol-Einheit (A) + alicyclische Dioleinheit (B), die anders ist als die 1,4 : 3,6-Dianhydrohexitol-Einheiten (A)) / (Terephthalsäureeinheit (C)) 1,05 bis 1,5 beträgt.

14. Bi-orientierter Film nach einem der Ansprüche 9 bis 13, **dadurch gekennzeichnet, dass** der bi-orientierte Film eine Dicke von 10 µm bis 250 µm aufweist.

15. Bi-orientierter Film nach einem der Ansprüche 9 bis 14, **dadurch gekennzeichnet, dass** der bi-orientierte Film ein oder mehrere zusätzliche Polymere und/oder ein oder mehrere Additive umfasst.

16. Bi-orientierter Film nach einem der Ansprüche 9 bis 15, **dadurch gekennzeichnet, dass** der bi-orientierte Film durch eine Koronabehandlung, eine Metallisierungsbehandlung oder eine Plasmabehandlung behandelt wird.

17. Verfahren zur Herstellung eines bi-orientierten Films, umfassend die folgenden Schritte:
• Bereitstellung eines teilkristallinen thermoplastischen Polyesters, umfassend mindestens eine 1,4 : 3,6-Dianhydrohexitol-Einheit (A), mindestens eine alicyclische Dioleinheit (B), die anders ist als die 1,4 : 3,6-Dianhydrohexitol-Einheiten (A), mindestens eine Terephthalsäureeinheit (C), wobei das Molverhältnis (A)/[(A) + (B)] mindestens 0,05 und höchstens 0,30 ist, wobei der Polyester frei von nichtcyclischen aliphatischen Dioleinheiten ist oder eine molare Menge nichtcyclischer aliphatischer Dioleinheiten bezogen auf die Gesamtheit der monomeren Polyestereinheiten von weniger als 5% umfasst und dessen verringerte Viskosität in Lösung (25 °C; Phenol (50%m) : ortho-Dichlorbenzol (50%m); 5 g/l Polyester) größer als 50 ml/g ist
• Herstellung des bi-orientierten Films aus dem im vorherigen Schritt erhaltenen teilkristallinen thermoplastischen Polyester.

18. Herstellungsverfahren nach Anspruch 17, **dadurch gekennzeichnet, dass** der Herstellungsschritt nach dem Extrusionsgussverfahren und insbesondere nach dem Stenter-Verfahren durchgeführt wird.

19. Herstellungsverfahren nach Anspruch 17 oder 18, **dadurch gekennzeichnet, dass** das alicyclische Diol (B) ein Diol ist, ausgewählt aus 1,4-Cyclohexandimethanol, 1,2-Cyclohexandimethanol, 1,3-Cyclohexandimethanol oder einer Mischung dieser Diole, sehr bevorzugt 1,4-Cyclohexandimethanol.

20. Herstellungsverfahren nach einem der Ansprüche 17 bis 19, **dadurch gekennzeichnet, dass** das 1,4 : 3,6-Dianhydrohexitol (A) Isosorbid ist.

21. Herstellungsverfahren nach einem der Ansprüche 17 bis 20, **dadurch gekennzeichnet, dass** der Polyester frei von einer nichtcyclischen aliphatischen Dioleinheit ist oder eine molare Menge nichtcyclischer aliphatischer Dioleinheiten bezogen auf die Gesamtheit der monomeren Polyestereinheiten weniger als 1% umfasst, vorzugsweise der Polyester frei von einer nichtcyclischen aliphatischen Dioleinheit ist.

22. Herstellungsverfahren nach einem der Ansprüche 17 bis 21, **dadurch gekennzeichnet, dass** das Molverhältnis (3,6-Dianhydrohexitol-Einheit (A) + alicyclische Dioleinheit (B), die anders ist als die 1,4 : 3,6-Dianhydrohexitol-Einheiten (A))/(Terephthalsäureeinheit (C)) 1,05 bis 1,5 beträgt.

23. Herstellungsverfahren nach einem der Ansprüche 17 bis 22, **dadurch gekennzeichnet, dass** der bi-orientierte Film eine Dicke von 10 µm bis 250 µm aufweist.

24. Herstellungsverfahren nach einem der Ansprüche 17 bis 23, **dadurch gekennzeichnet, dass** der bi-orientierte Film ein oder mehrere zusätzliche Polymere und/oder ein oder mehrere Additive umfasst.

25. Herstellungsverfahren nach einem der Ansprüche 17 bis 24, **dadurch gekennzeichnet, dass** der bi-orientierte Film durch eine Koronabehandlung, eine Metallisierungsbehandlung oder eine Plasmabehandlung behandelt wird.

## Claims

1. The use of a semicrystalline thermoplastic polyester for producing biaxially oriented films, said polyester comprising:
• at least one 1,4:3,6-dianhydrohexitol unit (A);
• at least one alicyclic diol unit (B) other than the 1,4:3,6-dianhydrohexitol units (A);
• at least one terephthalic acid unit (C);
wherein the (A)/[(A)+(B)] molar ratio is at least 0.05 and at most 0.30;
said polyester not containing any aliphatic non-cyclic diol units or comprising a molar amount of aliphatic non-cyclic diol units, relative to all the monomer units of the polyester, of less than 5%, and the reduced viscosity in solution (25°C; phenol (50%m): ortho-dichlorobenzene (50%m); 5 g/l of polyester) of said polyester being greater than 50 ml/g.

2. The use as claimed in claim 1, **characterized in that** the alicyclic diol (B) is a diol chosen from 1,4-cyclohexanedimethanol, 1,2-cyclohexanedimethanol, 1,3-cyclohexanedimethanol or a mixture of these diols, very preferentially 1,4-cyclohexanedimethanol.

3. The use as claimed in either one of claims 1 and 2, **characterized in that** the 1,4:3,6-dianhydrohexitol (A) is isosorbide.

4. The use as claimed in any one of claims 1 to 3, **characterized in that** the polyester does not contain any aliphatic non-cyclic diol units, or comprises a molar amount of aliphatic non-cyclic diol units, relative to all the monomer units of the polyester, of less than 1%, preferably the polyester does not contain any aliphatic non-cyclic diol units.

5. The use as claimed in any one of claims 1 to 4, **characterized in that** the (3,6-dianhydrohexitol unit (A) + alicyclic diol unit (B) other than the 1,4:3,6-dianhydrohexitol units (A))/(terephthalic acid unit (C)) molar ratio is from 1.05 to 1.5.

6. The use as claimed in any one of claims 1 to 5, **characterized in that** the biaxially oriented film has a thickness of from 10 µm to 250 µm.

7. The use as claimed in any one of claims 1 to 6, **characterized in that** the biaxially oriented film comprises one or more additional polymers and/or one or more additives.

8. The use as claimed in any one of claims 1 to 7, **characterized in that** the biaxially oriented film is treated by a corona treatment, a metallization treatment or a plasma treatment.

9. A biaxially oriented film comprising a semicrystalline thermoplastic polyester comprising:
• at least one 1,4:3,6-dianhydrohexitol unit (A);
• at least one alicyclic diol unit (B) other than the 1,4:3,6-dianhydrohexitol units (A);
• at least one terephthalic acid unit (C);
wherein the (A)/[(A)+(B)] molar ratio is at least 0.05 and at most 0.30;
said polyester not containing any aliphatic non-cyclic diol units or comprising a molar amount of aliphatic non-cyclic diol units, relative to all the monomer units of the polyester, of less than 5%, and the reduced viscosity in solution (25°C; phenol (50%m): ortho-dichlorobenzene (50%m); 5 g/l of polyester) of said polyester being greater than 50 ml/g.

10. The biaxially oriented film as claimed in claim 9, **characterized in that** the alicyclic diol (B) is a diol chosen from 1,4-cyclohexanedimethanol, 1,2-cyclohexanedimethanol, 1,3-cyclohexanedimethanol or a mixture of these diols, very preferentially 1,4-cyclohexanedimethanol.

11. The biaxially oriented film as claimed in either of claims 9 and 10, **characterized in that** the 1,4:3,6-dianhydrohexitol (A) is isosorbide.

12. The biaxially oriented film as claimed in one of claims 9 to 11, **characterized in that** the polyester does not contain any aliphatic non-cyclic diol units, or comprises a molar amount of aliphatic non-cyclic diol units, relative to all the monomer units of the polyester, of less than 1%, preferably the polyester does not contain any aliphatic non-cyclic diol units.

13. The biaxially oriented film as claimed in one of claims 9 to 12, **characterized in that** the (3,6-dianhydrohexitol unit (A) + alicyclic diol unit (B) other than the 1,4:3,6-dianhydrohexitol units (A))/(terephthalic acid unit (C)) molar ratio is from 1.05 to 1.5.

14. The biaxially oriented film as claimed in one of claims 9 to 13, **characterized in that** the biaxially oriented film has a thickness of from 10 µm to 250 µm.

15. The biaxially oriented film as claimed in one of claims 9 to 14, **characterized in that** the biaxially oriented film comprises one or more additional polymers and/or one or more additives.

16. The biaxially oriented film as claimed in one of claims 9 to 15, **characterized in that** the biaxially oriented film is treated by a corona treatment, a metallization treatment or a plasma treatment.

17. A process for producing a biaxially oriented film, comprising the following steps of:
• provision of a semicrystalline thermoplastic polyester comprising at least one 1,4:3,6-dianhydrohexitol unit (A), at least one alicyclic diol unit (B) other than the 1,4:3,6-dianhydrohexitol units (A), at least one terephthalic acid unit (C), wherein the (A)/[(A)+(B)] molar ratio is at least 0.05 and at most 0.30, said polyester not containing any aliphatic non-cyclic diol units or comprising a molar amount of aliphatic non-cyclic diol units, relative to all the monomer units of the polyester, of less than 5%, and the reduced viscosity in solution (25°C; phenol (50%m): ortho-dichlorobenzene (50%m); 5 g/l of polyester) of said polyester being greater than 50 ml/g;
• preparation of said biaxially oriented film from the semicrystalline thermoplastic polyester obtained in the preceding step.

18. The production process as claimed in claim 17, **characterized in that** the preparation step is carried out by the cast extrusion method, and in particular by the Stenter process.

19. The production process as claimed in claim 17 or 18, **characterized in that** the alicyclic diol (B) is a diol chosen from 1,4-cyclohexanedimethanol, 1,2-cyclohexanedimethanol, 1,3-cyclohexanedimethanol or a mixture of these diols, very preferentially 1,4-cyclohexanedimethanol.

20. The production process as claimed in any one of claims 17 to 19, **characterized in that** the 1,4:3,6-dianhydrohexitol (A) is isosorbide.

21. The production process as claimed in any one of claims 17 to 20, **characterized in that** the polyester does not contain any aliphatic non-cyclic diol units, or comprises a molar amount of aliphatic non-cyclic diol units, relative to all the monomer units of the polyester, of less than 1%, preferably the polyester does not contain any aliphatic non-cyclic diol units.

22. The production process as claimed in any one of claims 17 to 21, **characterized in that** the (3,6-dianhydrohexitol unit (A) + alicyclic diol unit (B) other than the 1,4:3,6-dianhydrohexitol units (A))/(terephthalic acid unit (C)) molar ratio is from 1.05 to 1.5.

23. The production process as claimed in any one of claims 17 to 22, **characterized in that** the biaxially oriented film has a thickness of from 10 µm to 250 µm.

24. The production process as claimed in any one of claims 17 to 23, **characterized in that** the biaxially oriented film comprises one or more additional polymers and/or one or more additives.

25. The production process as claimed in any one of claims 17 to 24, **characterized in that** the biaxially oriented film is treated by a corona treatment, a metallization treatment or a plasma treatment.
